# DEMANDE DE BREVET EUROPEEN

(11) **EP 0 713 739 A2**
(43) Date de publication de la demande: **29.05.1996**
(21) Numéro de dépôt: 95118121.3
(22) Date de dépôt: 17.11.1995
(51) Int. Cl.: B23B 27/00

(54) **Outil d'usinage à plaquettes de coupe amovibles**

(30) Priorité: 23.11.1994 CH 3528/94
(71) Demandeur: STELLRAM S.A., CH-1260 Nyon (CH)
(72) Inventeur: Barioni, Redi, CH-1196 Gland (CH)
(74) Mandataire: Micheli & Cie

(57) **Abrégé**

L'outil d'usinage à plaquettes de coupe amovibles selon l'invention comporte des moyens de réglage micrométrique de la position des plaquettes, ces plaquettes de coupe (3) étant fixées dans des sièges ou logements présentant un fond (4) et une surface d'appui latérale (5). Chaque logement est aménagé dans une portion d'un élément (2) de corps d'outil (1) déplaçable par déformation élastique du matériau le constituant dans au moins une direction située dans un plan parallèle audit fond ou à la face d'appui latérale. Les moyens de réglage (8,10) coopèrent avec ladite portion pour la déplacer de manière réversible et sensiblement linéaire et régler ainsi la position dudit logement et par là de la plaquette de coupe.

## Description

La présente invention se rapporte à un outil d'usinage par enlèvement de copeaux à plaquettes amovibles et plus particulièrement à un tel outil comportant des moyens de réglage micrométrique de la position des plaquettes.

On connaît déjà des systèmes de réglage fin ou micrométrique de la position d'une plaquette de coupe amovible sur un corps d'outil qui agissent directement sur l'un des flancs de la plaquette. Dans le document CH 637.316 par exemple, l'organe de réglage est constitué par une vis à extrémité conique qui sert également de surface d'appui latérale pour la plaquette et fait partie intégrante du siège de celle-ci. La plaquette de coupe n'est ainsi pas en appui contre une surface, mais contre une ligne de contact, ce qui est préjudiciable à la stabilité de la partie active (plaquette) de l'outil, et par-là à la fiabilité du processus d'usinage.

Dans d'autres systèmes connus, la plaquette de coupe est fixée dans un logement prévu dans une cartouche ou autre support, et le réglage de la position de la plaquette est effectué indirectement, c'est-à-dire par une action sur la cartouche ou support, comme décrit par exemple dans le document CH 600.977. Dans ce cas, le siège de la plaquette de coupe comporte généralement des surfaces d'appui optimales mais, par contre, de tels systèmes présentent l'inconvénient d'être relativement volumineux et encombrants, et nécessitent en plus des moyens de réglage, la présence d un ou plusieurs éléments de fixation de la cartouche ou support sur le corps de l'outil.

En conséquence, le but de la présente invention consiste à remédier aux inconvénients précités des dispositifs connus, en fournissant un outil d'usinage à plaquettes de coupe amovibles, dans lequel les plaquettes sont fixées de manière optimale dans leur siège ou logement et qui présente des moyens de réglage micrométrique de la position des plaquettes, faciles à utiliser et surtout peu encombrants, notamment sans nécessiter de support ou cartouche intermédiaire.

L'outil d'usinage à plaquettes de coupe amovibles selon l'invention visant à atteindre le but précité présente les caractéristiques définies dans la revendication 1.

La solution ainsi préconisée fait intervenir plus particulièrement la déformation élastique, dans une plage qui peut varier généralement de 0,05 jusqu'à 0,7 mm environ, selon la longueur et la section de flexion, du matériau constituant le corps de l'outil ou une portion de celui-ci qui présente le logement recevant la plaquette de coupe, ceci de telle sorte que ce logement soit déplaçable dans plusieurs directions et dans plusieurs plans dans les limites précitées de la déformation élastique du matériau, en général par exemple un acier du type acier à outils ou acier ressort. La présente invention peut s'appliquer aussi bien à des outils à plaquettes montées et travaillant de manière conventionnelle qu'à des outils avec plaquettes tangentielles montées sur chant.

La présente invention sera maintenant décrite plus en détails, en référence aux dessins annexés, qui illustrent schématiquement et à titre d'exemples quelques formes d'exécution, plus particulièrement d'une partie d'un corps d'outil autour d'un logement pour la plaquette de coupe.

La figure 1 est une vue en plan d'une première réalisation avec une plaquette de coupe dite tangentielle, montée sur chant, et avec des moyens de réglage de la position de la plaquette de coupe dans une direction d'un plan ainsi que dans une autre direction d'un deuxième plan, perpendiculaire au premier; les figures 1A et 1B sont des vues en coupe selon les lignes AA et BB de la figure 1.

La figure 2 est une vue en plan d'une seconde réalisation avec une plaquette de coupe montée de manière conventionnelle, et avec des moyens de réglage de la position de la plaquette de coupe dans deux directions différentes d'un même plan; les figures 2A et 2B sont des vues en coupe selon les lignes AA et BB de la figure 2.

La figure 3 est une variante de la figure 2, avec des moyens de réglage de la position de la plaquette de coupe dans trois directions différentes d'un même plan, les figures 3A et 3B étant des vues en coupe selon les lignes AA et BB de la figure 3.

La figure 4 est une variante de la figure 1, avec des moyens de réglage de la position de la plaquette de coupe dans trois directions d'un même plan perpendiculaire au premier; les figures 4A et 4B sont des vues en coupe selon les lignes AA et BB de la figure 4.

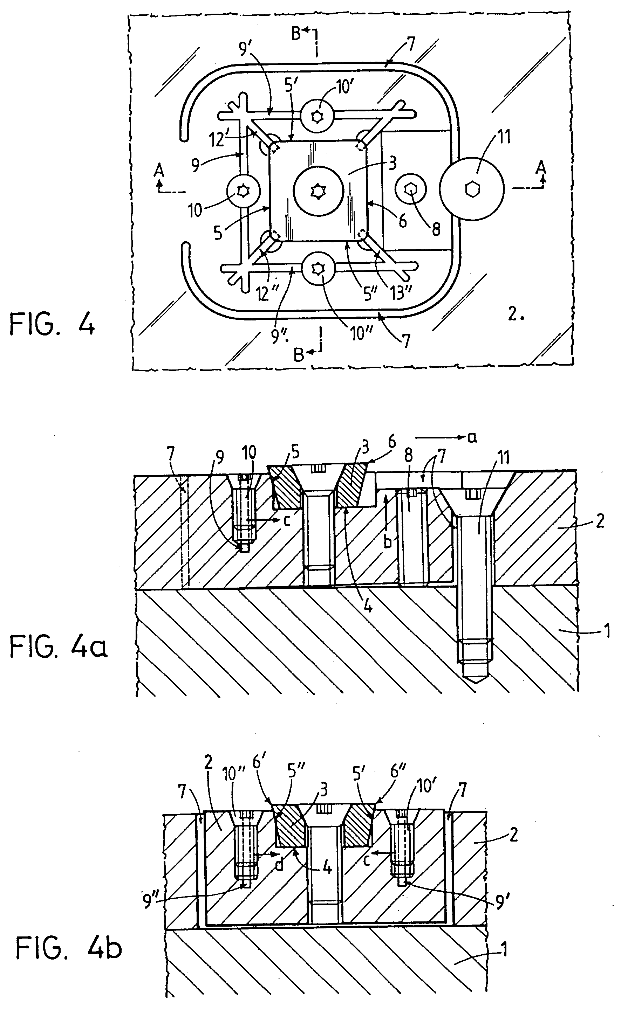

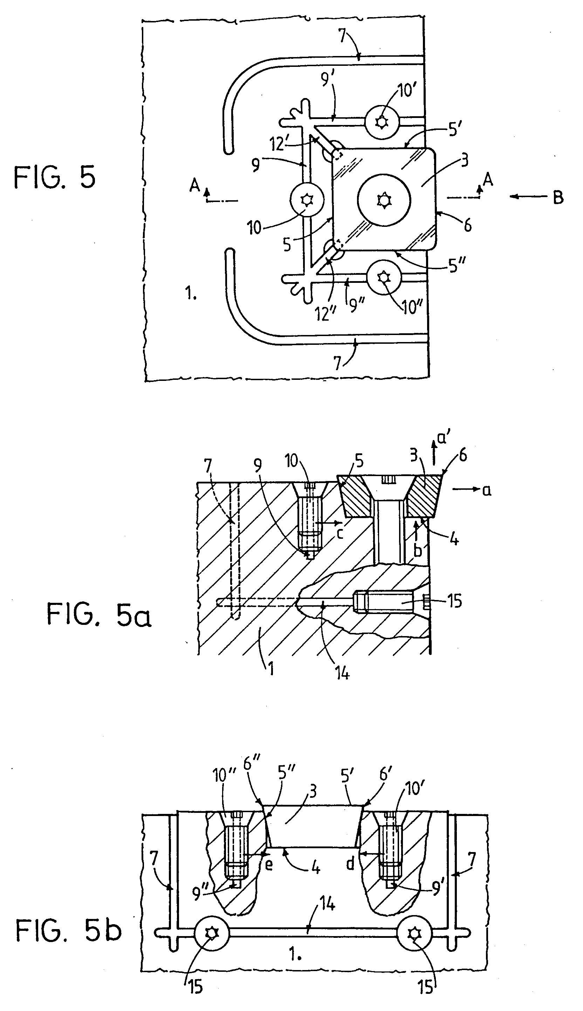

Enfin, la figure 5 est une vue en plan d'une forme d'exécution analogue à celle de la figure 4, avec un corps d'outil monobloc équipé soit d'une plaquette travaillant tangentiellement, soit d'une plaquette conventionnelle, la figure 5A étant une vue en coupe selon la ligne AA de la figure 5, et la figure 5B une vue de côté selon la flèche B de la figure 5.

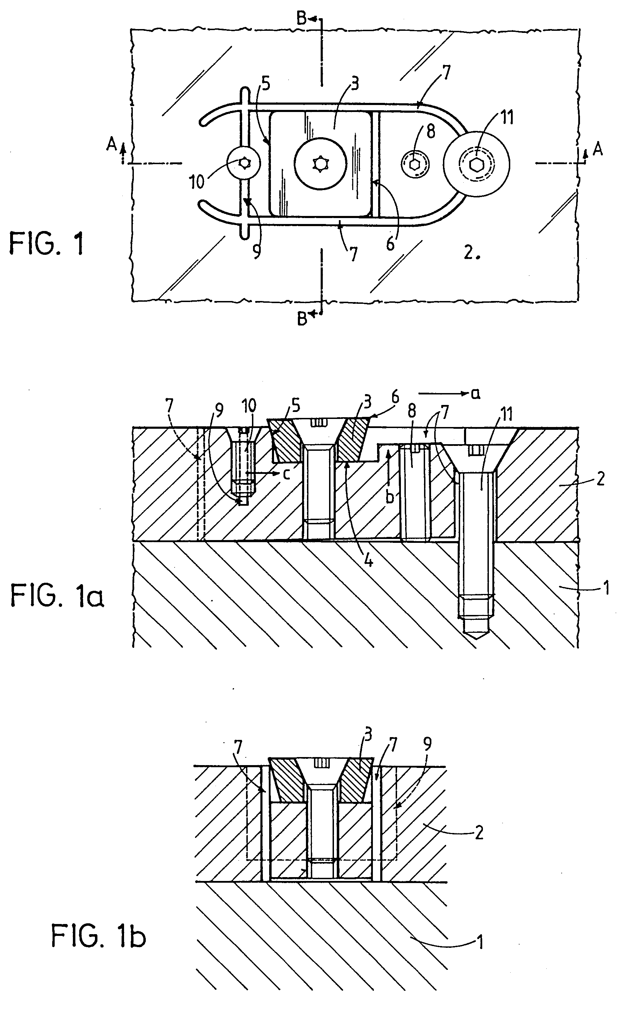

Les figures 1, 1A et 1B illustrent une application de l'invention à une plaquette de coupe amovible 3 dite tangentielle, montée sur chant (direction de coupe selon flèche "a" de la figure 1A) et fixée, par exemple, à l'aide d'une vis à tête fraisée (conique) sur un siège aménagé dans un élément 2 d'un corps d'outil; ce siège, comportant une surface de base ou fond 4 et une surface d'appui latérale 5, peut "se mouvoir" dans deux directions pour permettre un réglage micrométrique de la position de l'arête de coupe 6 de la plaquette amovible. Ce réglage, basé sur l'élasticité de la matière constituant l'élément 2 du corps d'outil, est rendu possible grâce à une fente 7, traversant l'élément 2 de part en part dans sa hauteur (épaisseur) et aménagée autour d une grande partie de la zone du siège de la plaquette de coupe, formant ainsi une sorte de languette. En agissant sur une vis 8 disposée dans cette languette, à l'avant de la plaquette amovible par rapport à son sens de coupe (flèche "a"), et prenant appui contre l'élément 1 du corps d'outil, ladite languette se soulève, ce qui déplace la surface de base 4 du siège de la plaquette, donc l'arête de coupe 6 de cette dernière, dans le sens de la flèche "b" (figure 1A). En desserrant la vis 8, la languette ou portion déplaçable reprend sa position originale de par l'élasticité du matériau.

Une autre lente 9 est aménagée parallèlement à la surface latérale 5 du siège de la plaquette de coupe, sur une partie seulement de la hauteur (épaisseur) de l'élément 2 du corps d'outil. En actionnant une vis à tête fraisée 10 logée à cheval dans les parois de cette lente et en prise, sur une partie ou toute sa longueur, avec des "couronnes" (ici deux) de filetage comportant une fraisure coopérant avec la tête conique de la vis, cette fente 9 tend à s'écarter, ce qui déplace la surface d'appui latérale 5 du siège de la plaquette, donc son arête de coupe 6, dans le sens de la flèche "c" (figure 1A). En desserrant la vis 10, la portion déplaçable reprend sa position originale. Pour éviter, lorsque l'outil est en travail, tout risque de vibration de la languette délimitée par la fente 7, le dispositif peut être complété si nécessaire par une vis supplémentaire 11 à tête cylindrique ou conique passant à travers l'élément 2 et vissée dans l'élément 1 du corps d'outil, dont une partie de sa tête vient appuyer sur ladite languette dans le sens opposé à celui engendré par le serrage de la vis 8 (flèche "b"), après que le réglage ait été effectué, de manière à bloquer le dispositif dans sa position choisie.

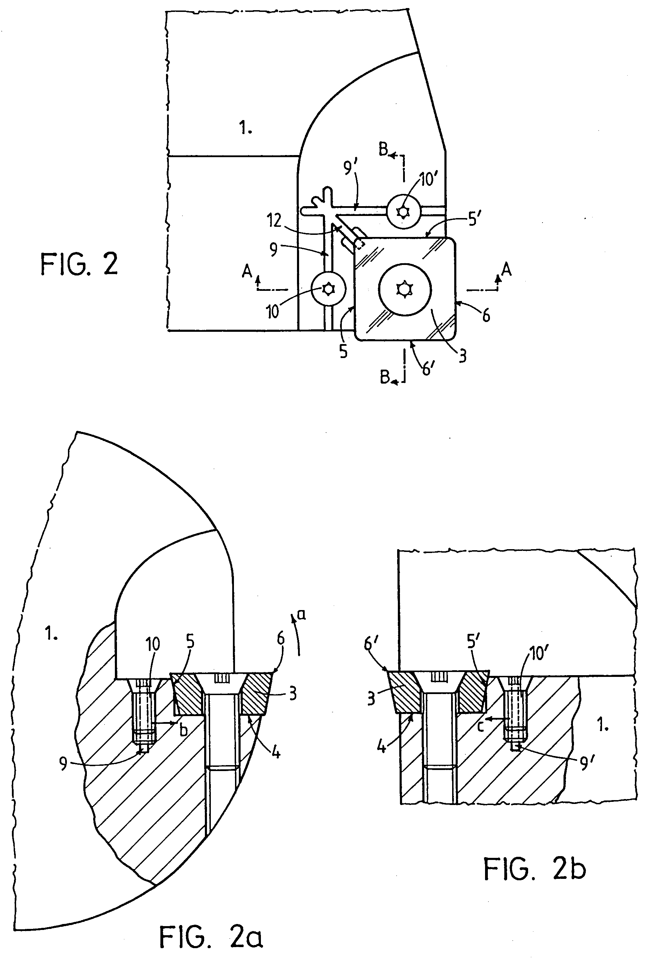

Les figures 2, 2A et 2B illustrent une application de l'invention à une plaquette de coupe amovible 3, montée de façon conventionnelle (direction de coupe selon flèche "a" de la figure 2A) et fixée, par exemple, à l'aide d'une vis à tête fraisée dans un siège aménagé dans un corps d'outil 1; ce siège comporte une surface de base 4 et deux surfaces d'appui latérales 5 et 5', et peut "se mouvoir", dans un même plan, selon deux directions différentes, pour permettre le réglage micrométrique de la position des arêtes de coupe 6 et 6' de la plaquette amovible. Ce réglage, toujours basé sur l'élasticité de la matière, ici du corps d'outil 1, s'obtient de la manière suivante : une fente 9 est aménagée, sur une longueur et une profondeur déterminées, parallèlement à la surface d'appui latérale 5 du siège de la plaquette de coupe. En agissant sur une vis à tête fraisée 10 logée à cheval dans les parois de cette fente 9 et en prise avec deux "couronnes" de filetage comportant une fraisure coopérant avec la tête conique de la vis, cette fente 9 tend à s'écarter, ce qui déplace la surface d'appui latérale 5 du siège de la plaquette, et par conséquent son arête de coupe 6, dans le sens de la flèche "b" de la figure 2A. En desserrant la vis 10, la portion déplaçable reprend sa position originale de par l'élasticité de la matière.

Une seconde fente 9' est aménagée, sur une longueur et une profondeur qui peuvent être sensiblement identiques aux dimensions de la fente 9, parallèlement à la surface d'appui latérale 5' du siège de la plaquette de coupe. En actionnant une vis à tête fraisée 10' logée à cheval dans les parois de cette fente 9', cette dernière tend à s'écarter, ce qui déplace la surface d'appui latérale 5' du siège de la plaquette, par conséquent son arête de coupe 6', dans le sens de la flèche "c" de la figure 2B. En desserrant la vis 10', la portion mobile reprend sa position originale.

Afin de faciliter le fléchissement de chacun des deux secteurs du corps d'outil comportant les surface d'appui latérales 5 et 5',et permettre un réglage indépendant dans chaque direction, une fente supplémentaire 12 est aménagée selon la bissectrice de l'angle formé par les fentes 9 et 9', entre l'intersection de ces dernières et le siège de la plaquette de coupe. La profondeur de la fente 12 est identique à celle des autres fentes.

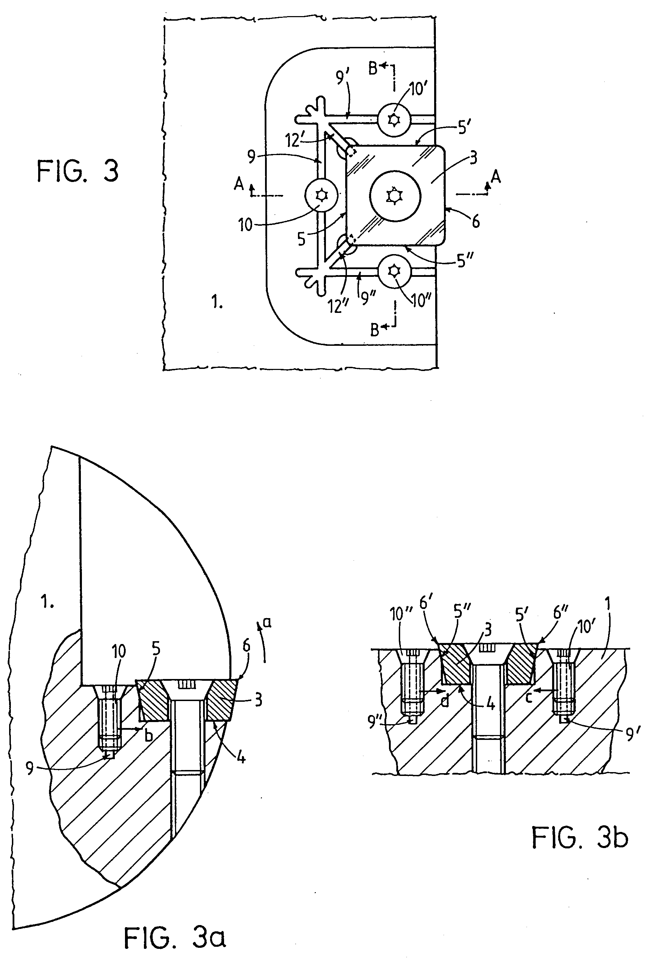

Les figures 3, 3A et 3B illustrent une application analogue à celle des figures 2, 2A et 2B. Le siège de la plaquette de coupe amovible 3 comporte cependant une surface de base 4 et trois surfaces d'appui latérales 5, 5' et 5'' et peut "se mouvoir", dans un même plan, selon trois directions différentes, dans le sens des flèches "b" (figure 3A) ainsi que "c" et "d" (figure 3B), pour permettre le réglage micrométrique de la position des arêtes de coupe 6, 6' et 6'' de la plaquette amovible. Ainsi, une troisième fente 9'', identique à la fente 9', est aménagée parallèlement à la surface d'appui latérale 5'' du siège de la plaquette de coupe.

Le fonctionnement de cette réalisation est identique à celui des figures 2, 2A et 2B, et des fentes supplémentaires 12', 12'' sont également aménagées selon la bissectrice des angles formés respectivement par les fentes 9 et 9' d'une part, 9 et 9'' d'autre part, entre l'intersection de ces dernières et le siège de la plaquette de coupe, ceci afin de permettre un réglage indépendant des trois portions déplaçables délimitées par les fentes précitées.

Les figures 4, 4A et 4B illustrent une application analogue à celle des figures 1, 1A et 1B, c'est-à-dire à une plaquette amovible 3 tangentielle (direction de coupe selon la flèche "a" de la figure 1A). Le siège de la plaquette amovible comporte cependant une surface de base 4 et trois surfaces d'appui latérales 5, 5' et 5'' et peut "se mouvoir", dans un même plan, dans trois directions différentes, selon les flèches "c" (figure 4A), "d" et "e" (figure 4B), ainsi que, dans un plan perpendiculaire au premier, dans une quatrième direction pour permettre le réglage micrométrique de la position de l'arête de coupe en service 6 et des arêtes adjacentes 6' et 6'' de la plaquette amovible. Comme dans le premier exemple d'application, une fente 7 traversant de part en part l'élément 2 du corps d'outil entoure en grande partie la zone du siège de la plaquette de coupe. La "languette" ainsi formée peut se soulever sous l'action de la vis 8 qui prend appui sur l'élément 1 du corps d'outil, ce qui déplace la surface de base 4 du siège de la plaquette, donc l'arête de coupe 6 de cette dernière, dans le sens de la flèche "b" (figure 4A).

Pour le reste, la construction et le fonctionnement de cette réalisation est analogue à celles décrites précédemment, et les mêmes chiffres de référence sont utilisés sur les figures correspondantes 4, 4A et 4B, avec en plus des fentes supplémentaires 13', 13'' aménagées selon une variation identique à celle des fentes 12', 12'', entre l'extrémité de la fente 9', respectivement 9'', et le siège de la plaquette de coupe.

Enfin, la forme d'exécution illustrée sur les figures 5, 5A et 5B se différencie de celle des figures 4, 4A et 4B en ce que le siège de la plaquette de coupe amovible est aménagé dans le corps d'outil 1 constitué d'un seul élément (monobloc); néanmoins, comme dans la réalisation précédente, ce siège comporte une surface de base ou fond 4 et trois surfaces d'appui latérales 5, 5' et 5'' pouvant "se déplacer" dans un même premier plan selon trois directions différentes et dans un second plan, perpendiculaire au premier, selon une quatrième direction, afin de permettre le réglage micrométrique de la position de l'arête de coupe en service 6 et des arêtes adjacentes 6' et 6'' de la plaquette amovible 3. En outre, dans cette forme d'exécution, un des côtés délimitant la surface de base 4 du siège de la plaquette de coupe, situé sous l'arête de coupe en service, débouche à l'extérieur du corps d'outil 1; ainsi, cette réalisation s'applique aussi bien à une plaquette amovible travaillant tangentiellement (direction de coupe selon la flèche "a" de la figure 5A) qu'à une plaquette amovible travaillant de manière conventionnelle (direction de coupe selon la flèche "a'" de la figure 5A).

Compte tenu du fait que le corps d'outil n'est constitué que d'un seul élément, une fente 14, délimitant la zone du siège de la plaquette de coupe 3, est aménagée sous ladite plaquette dans un plan sensiblement parallèle à la surface de base 4 du siège. Une fente 7, sensiblement perpendiculaire à la fente 14 et traversant cette dernière, entoure une grande partie de cette zone du siège de la plaquette de coupe. La "languette" ainsi formée peut se soulever sous l'action de deux vis à tête fraisée 15 logées à cheval dans les parois de la fente 14; sous l'action des vis 15, et plus particulièrement de leur tête conique coopérant avec des fraisures correspondantes aménagées dans le corps d'outil, la fente 14 s'écarte et la "languette", donc le siège de la plaquette, se soulève dans le sens de la flèche "b" de la figure 5A.

Les fentes 9, 9' et 9'', quant à elles, ne débouchent pas dans la fente 14. En actionnant les vis à tête fraisée 10, 10' et/ou 10'' logées à cheval dans les parois desdites fentes, on déplace respectivement les surfaces d'appui latérales 5, 5' et/ou 5'' du siège de la plaquette, donc les arêtes de coupe 6, 6' et/ou 6'' dans le sens des flèches "c" (figure 5A), "d" et/ou "e" (figure 5B).

Afin de permettre le déplacement indépendant de chacun des trois secteurs du corps d'outil comportant les surfaces d'appui latérales 5, 5' et 5'', deux fentes supplémentaires 12' et 12'' sont aménagées selon la bissectrice des angles formés respectivement par les fentes 9 et 9' d'une part, 9 et 9'' d'autre part, entre l'intersection de ces dernières et le siège de la plaquette de coupe.

## Revendications

1. Outil d'usinage à plaquettes de coupe amovibles comportant des moyens de réglage micrométrique de la position des plaquettes, ces plaquettes de coupe étant fixées dans des sièges ou logements présentant au moins un fond et au moins une surface d'appui latérale, caractérisé par le fait que chaque logement est aménagé dans une portion d'un corps ou d'un élément de corps d'outil déplaçable par déformation élastique du matériau le constituant dans au moins une direction située dans au moins un plan parallèle audit fond ou à l'une des faces d'appui latérales; par le fait que les moyens de réglage coopèrent avec ladite portion pour la déplacer de manière réversible et sensiblement linéaire et régler ainsi la position dudit logement et par là de la plaquette de coupe; et par le fait qu'au moins une fente est aménagée dans le corps d'outil à proximité dudit logement et parallèlement à au moins une surface d'appui latérale de celui-ci, de telle sorte que l'ouverture de cette fente provoque un déplacement sensiblement linéaire du logement, et par là de la plaquette de coupe, dans au moins une direction située dans un plan perpendiculaire à ladite fente.

2. Outil d'usinage selon la revendication 1, caractérisé par le fait que les moyens de réglage micrométrique sont constitués par une vis à tête conique engagée dans des couronnes de filetage aménagées dans les parois de la fente et comportant une fraisure coopérant avec la tête conique de la vis, de telle sorte que ladite fente soit écartée élastiquement par vissage de la vis, réciproquement tende à revenir dans sa position initiale par dévissage de la vis.

3. Outil d'usinage selon la revendication 1 ou la revendication 2, caractérisé par le fait qu'il comporte au moins deux fentes adjacentes aménagées parallèlement à deux surfaces d'appui latérales dudit logement, de telle sorte que l'ouverture de ces fentes provoque un déplacement sensiblement linéaire du logement dans au moins deux directions situées dans un plan perpendiculaire auxdites fentes, et par le fait qu'une fente supplémentaire est aménagée selon la bissectrice de l'angle formé par les deux fentes, entre l'intersection de ces dernières et ledit logement.

4. Outil d'usinage selon l'une des revendications 1 à 3, caractérisé par le fait qu'une fente est aménagée perpendiculairement au fond dudit logement à travers un élément du corps d'outil comportant ce logement, et autour de celui-ci, de manière à constituer une portion en forme de languette déplaçable réversiblement dans une direction sensiblement linéaire située dans un plan perpendiculaire au fond du logement.

5. Outil d'usinage selon la revendication 4, caractérisé par le fait que les moyens de réglage micrométrique sont constitués par une vis coopérant avec un filetage pratiqué dans la languette déplaçable, en avant du logement par rapport au sens de coupe de la plaquette qui y est fixée, l'une des extrémités de cette vis étant accessible depuis l'extérieur pour l'actionner et l'autre extrémité prenant appui contre le corps de l'outil, de telle sorte qu'en vissant la vis ladite languette soit soulevée et qu'en la dévissant celle-ci tende à reprendre élastiquement sa position initiale.

6. Outil d'usinage selon la revendication 5, caractérisé par le fait qu'il comporte encore une vis de blocage coopérant avec un filetage pratiqué dans ledit élément du corps d'outil, en avant de ladite languette déplaçable par rapport au sens de coupe, et dont une portion de la tête vient s'appuyer sur ladite languette dans le sens opposé au déplacement provoqué par le serrage de la vis de réglage.

7. Outil d'usinage selon l'une des revendications 1 à 3, caractérisé par le fait que le corps d'outil est formé d'une pièce et qu'une première fente est aménagée dans celui-ci perpendiculairement au fond dudit logement et autour de celui-ci, par le fait qu'une seconde fente est aménagée sous ledit logement, dans un plan sensiblement parallèle au fond de celui-ci, et par le fait que les première et seconde fentes délimitent une portion en forme de languette qui est déplaçable réversiblement dans une direction sensiblement linéaire située dans un plan perpendiculaire au fond du logement.

8. Outil d'usinage selon la revendication 7, caractérisé par le fait que les moyens de réglage micrométrique sont constitués par une ou deux vis à tête conique engagées dans des couronnes de filetage aménagées dans les parois de ladite seconde fente et comportant une fraisure coopérant avec la tête conique de la vis, de telle sorte que ladite fente soit écartée, et par là ladite languette soulevée, par vissage de la vis, réciproquement tende à revenir élastiquement dans sa position initiale par dévissage de la vis.
